# EUROPÄISCHE PATENTSCHRIFT

(11) **EP 2 761 276 B1**
(45) Veröffentlichungstag und Bekanntmachung des Hinweises auf die Patenterteilung: **13.04.2016**
(21) Anmeldenummer: 12778605.1
(22) Anmeldetag: 20.09.2012
(51) Int. Cl.: G01N 21/64, G02B 21/00, G01J 3/28, G01J 3/44

(54) **AUSWERTESCHALTUNG FÜR EINEN OPTOELEKTRONISCHEN DETEKTOR UND VERFAHREN ZUM AUFZEICHNEN VON FLUORESZENZEREIGNISSEN**
EVALUATION CIRCUIT FOR AN OPTOELECTRONIC DETECTOR AND METHOD FOR RECORDING FLUORESCENCE EVENTS
CIRCUIT D'ÉVALUATION POUR UN DÉTECTEUR OPTOÉLECTRONIQUE ET PROCÉDÉ D'ENREGISTREMENT D'ÉVÉNEMENTS DE FLUORESCENCE

(30) Priorität: 30.09.2011 DE 102011114874
(43) Veröffentlichungstag der Anmeldung: 06.08.2014
(73) Patentinhaber: Carl Zeiss Microscopy GmbH, 07745 Jena (DE)
(72) Erfinder: MÖHLER, Gunter, 04720 Mochau (DE); SCHMIDT, Dietmar, 07768 Bibra (DE); HOLUB, Oliver, 07745 Jena (DE); HAUSCHILD, Robert, A-1090 Wien (AT)
(74) Vertreter: Loritz, Rainer
(86) Internationale Anmeldenummer: PCT/EP2012/003939
(87) Internationale Veröffentlichungsnummer: WO 2013/045053

(56) Entgegenhaltungen:
- WO-A2-01/63223
- DE-A1- 2 604 460
- DE-A1-102008 029 458
- US-A1- 2001 015 411

## Beschreibung

Die Erfindung betrifft Mikroskop mit einer Auswerteschaltung zum Auswerten der elektrischen Signale eines optoelektronischen Detektors, insbesondere bei der Aufnahme von Fluoreszenzereignissen unter Anregung mittels Lichtpulsen, umfassend einen Analog-Digital-Wandler (ADC) mit einem Eingang zur Verbindung mit einem Ausgang des Detektors und mit einem Ausgang zur Ausgabe eines Digitalwerts, sowie ein Verfahren zum Aufzeichnen von Fluoreszenzereignissen mittels eines optoelektronischen Detektors in einem Mikroskop, wobei Lichtpulse mittels einer Lichtquelle auf eine Probe eingestrahlt werden und mittels des Detektors Licht von der Probe aufgenommen und in ein elektrisches Signal gewandelt und einem Analog-Digital-Wandler zugeführt wird. Die Lichtpulse stellen eine Folge von Beleuchtungszyklen dar.

Der Begriff Licht umfasst dabei im Sinne der Erfindung nicht nur sichtbare (vom menschlichen Auge wahrnehmbare) elektromagnetische Strahlung, sondern jegliche elektromagnetische Strahlung, die mit optischen Mitteln (insbesondere Brechung, Beugung, Polarisierung und Streuung) manipulierbar ist, also beispielsweise infrarote und ultraviolette Strahlung.

Für eine hochempfindliche Fluoreszenzmessung ist Streulicht in jeder Form störend, unabhängig davon, ob es sich um direktes Anregungslicht, welches (trotz spektraler Separation) in den Detektionskanal gelangt, um diffuses Streulicht optischer Komponenten, um an Oberflächen reflektiertes Anregungslicht oder um aus der Probe gestreutes Licht (besonders Rayleigh- und Raman-Streulicht) handelt. Die Raman-Streuung findet an dem in den zu untersuchenden Proben enthaltenen Lösungsmittel statt und kann bei keiner Probenanregung verhindert werden. In wässrigen biologischen Proben liegt das durch Raman-Streuung entstehende Streulicht spektral typischerweise im Wellenlängenbereich der Fluoreszenzemission und stellt ein Hindernis für Präzisionsmessungen dar, welches durch die standardmäßig eingesetzte Spektralfilterung nicht beseitigt werden kann. Umgekehrt ist die Fluoreszenz störend für die Messung eines Raman-Spektrums, die typischerweise zur Bestimmung der in der Probe vorliegenden Moleküle erfolgt, da die Fluoreszenz spektral nicht aus dem Raman-Spektrum gefiltert werden kann.

Im Stand der Technik ist eine Auswerteschaltung für die Messung gepulst angeregter Fluoreszenz mit einem Analog-Digital-Wandler beispielsweise aus US 2001/0015411 A1 bekannt. Die dort beschriebene Auswerteschaltung erfordert jedoch eine Synchronisation des Analog-Digital-Wandlers mit den Lichtpulsen, so dass entweder nur Fluoreszenzlicht aufgenommen werden kann oder aber keine Unterscheidung zwischen Fluoreszenz- und Streulicht möglich ist, insbesondere auch nicht nachträglich.

Der Erfindung liegt die Aufgabe zugrunde, eine Auswerteschaltung der eingangs genannten Art zu verbessern, so dass eine hohe Empfindlichkeit der Detektion mit geringem Aufwand ermöglicht wird.

Die Aufgabe wird gelöst durch ein Mikroskop, welches die in Anspruch 1 angegebenen Merkmale aufweist, und durch ein Verfahren, welches die in Anspruch 9 angegebenen Merkmale aufweist.

Vorteilhafte Ausgestaltungen der Erfindung sind in den Unteransprüchen angegeben.

Die Erfindung umfasst ein Mikroskop, insbesondere ein konfokales Rastermikroskop, mit einer für Pulsbetrieb geeigneten Lichtquelle, einem Pulsgeber zur Steuerung der Lichtquelle zur Emission von Lichtpulsen oder einem Pulsmonitor zur Überwachung der erzeugten Lichtpulse, einem optoelektronischen Detektor und einer Auswerteschaltung in einer der unten beschriebenen Ausgestaltungen, wobei der Eingang des Analog-Digital-Wandlers mit dem Ausgang des Detektors verbunden oder mittels eines Schalters verbindbar ist. Ein Pulsmonitor kann beispielsweise eine Photodiode sein, auf die ein Anteil der emittierten Lichtintensität gelenkt wird.

Erfindungsgemäß ist vorgesehen, dass die Auswerteschaltung ein Schieberegister mit mindestens einem (seriellen) Dateneingang, einem Takteingang, mehreren Registerstufen und mindestens einem (seriellen oder parallelen) Datenausgang aufweist, wobei der Ausgang des Analog-Digital-Wandlers (mittelbar oder unmittelbar) mit dem Dateneingang des Schieberegisters verbunden ist. Das Schieberegister kann beispielsweise in binärer Logik mehrere Bits breit sein, also in jeder Stufe ein oder mehrere Bits parallel aufnehmen. Ist das Schieberegister mehrere Bits breit, so können mehrere simultan detektierte Fluoreszenzereignisse in derselben Registerstufe gespeichert werden. Zweckmäßigerweise wird dem Analog-Digital-Wandler zu diesem Zweck ein Referenzwert vorgegeben, der einer zeitlich zusammenfallenden Detektion einer mit der Anzahl der Quantisierungsstufen übereinstimmenden Anzahl von Fluoreszenzereignissen entspricht. Der vom ADC ausgegebene Digitalwert ist dann größer als eins.

Mit der Erfindung können die zu unterschiedlichen Zeitpunkten mittels des Detektors aufgenommenen Lichtintensitäten in Form der mittels des Analog-Digital-Wandlers (A/D-Wandlers) ausgegebenen Digitalwerte unabhängig voneinander in den Stufen des Schieberegister gespeichert werden. Das ermöglicht später eine zeitaufgelöste Analyse der detektierten Fluoreszenzereignisse ohne dass während der Detektion aufwendigerweise ein Zeitstempel zu jedem Ereignis gespeichert zu werden bräuchte. Die Speicherung jedes Digitalwerts erfolgt zweckmäßigerweise jeweils in der Eingangsstufe des Schieberegisters, welche in der Regel die erste Registerstufe ist. Der Begriff des Speicherns im Schieberegister umfasst dabei das Anlegen des Digitalwerts an einen Dateneingang des Schieberegisters (Eingangsstufe), beispielsweise in Form elektrischer Spannungen, die Bits repräsentieren, und das Verschieben der Inhalte der Registerstufen zur jeweils nächsten Stufe.

Bei der Fluoreszenzdetektion können durch die so geschaffene zeitliche Unterscheidungsmöglichkeit ohne aufwendige Zeitstempel und statistische Analyse derselben sowohl die elastische Rayleigh- als auch die Ramanstreuung des Anregungslichtes vollständig eliminiert werden. Zusätzlich können im Gegensatz zu bekannten Arten der zeitkorrelierten Einzelphotonenzählung (engl. "time-correlated single-photon counting", TCSPC) alle entstehenden Fluoreszenzphotonen, die vom Detektor registriert werden, verarbeitet werden.

Besonders vorteilhaft sind Ausführungsformen, in denen der Inhalt des Schieberegisters bei Auftreten eines von Null verschiedenen Digitalwerts um eine Stufe verschoben wird. Dazu ist vorzugsweise der Ausgang des Analog-Digital-Wandlers auch mit dem Takteingang des Schieberegisters verbunden. Zeitintervalle ohne Fluoreszenzereignis verbrauchen auf diese Weise keinen Speicherplatz im Schieberegister. Vorzugsweise erfolgt die Verschiebung ausschließlich bei Auftreten eines von Null verschiedenen Digitalwerts.

Alternativ sind Ausführungsformen möglich, in denen der Inhalt des Schieberegisters, insbesondere mittels eines Taktgebers, wiederholt nach einer vorgegebenen Zeit um eine Stufe verschoben wird. Dazu umfasst die Auswerteschaltung vorzugsweise einen Taktgeber mit einer vorgegebenen oder vorgebbaren Taktfrequenz, der mit dem Takteingang des Schieberegisters verbunden ist. In dieser Ausführungsform werden auch Zeitintervalle ohne Fluoreszenzereignis im Schieberegister gespeichert. Bei konstantem Takt entspricht jede Registerstufe einem von mehreren Zeitintervallen identischer Dauer. Anhand der Position im Register, also anhand der laufenden Nummer der jeweiligen Registerstufe, können also im Nachhinein die Zeitpunkte der einzelnen Fluoreszenzereignisse auch ohne Zeitstempel rekonstruiert werden, was gegenüber dem Stand der Technik eine Verringerung der notwendigen Übertragungsbandbreite ermöglicht. Die Genauigkeit der Rekonstruktion hängt ausschließlich von der Taktperiode ab. Zur Verringerung der zu übertragenden Datenmenge brauchen Intervalle, in denen keine Ereignisse aufgetreten sind, nicht übertragen oder gespeichert zu werden. Alternativ können solche Intervalle komprimiert werden, um Bandbreite zu sparen. Beispielsweise kann anstelle von N Nullwerten ein Nullwert und die Anzahl N übertragen oder gespeichert werden.

Vorzugsweise wird ein mit den anregenden Lichtpulsen (insbesondere mit deren Beginn) synchronisiertes Signal identifiziert und um eine vorgegebene oder vorgebbare Zeit danach ein Markierungswert neben dem oder statt dem Digitalwert in der Eingangsstufe gespeichert. Zu diesem Zweck kann die Auswerteschaltung eine Verzögerungsschaltung mit variabel einstellbarer zeitlicher Verzögerung umfassen, die einen Eingang für ein (einen Lichtpuls, insbesondere dessen Beginn, anzeigendes) Signal und einen Ausgang zur Ausgabe des Signals nach der (momentan) eingestellten Verzögerung aufweist, wobei der Ausgang der Verzögerungsschaltung derart mit dem Dateneingang des Schieberegisters verbunden ist, dass durch die Ausgabe des verzögerten Signals an dem Dateneingang neben dem oder statt dem Digitalwert ein Markierungswert, insbesondere ein Nullwert, anliegt. Die Verschiebung der Inhalte der Registerstufen zur jeweils nächsten Stufe erfolgt dann beispielsweise ausschließlich bei Auftreten eines von Null verschiedenen Digitalwerts und bei Ausgabe des verzögerten Signals. Beispielsweise kann im Falle eines mehrere Bit breiten Schieberegisters in jeder Registerstufe ein einzelnes Bit für den Markierungswert reserviert sein, während das übrige Bit oder, bei einer Gesamtbreite von drei oder mehr Bits, die übrigen Bits, für die Aufnahme der Digitalwerte zur Verfügung stehen.

Der Markierungswert gibt den Zeitpunkt des Auftretens des verzögerten Signals relativ zu davor und danach im Schieberegister liegenden Fluoreszenzereignissen an und definiert so innerhalb jedes Beleuchtungszyklus zwei Zeitfenster. Das erlaubt die zeitliche Trennung von Streulicht und Fluoreszenzlicht, da Fluoreszenzlicht mit zeitlicher Verzögerung (im Nanosekundenzeitbereich) vom Anregungszeitpunkt emittiert wird, wohingegen Streuprozesse zeitlich so schnell stattfinden, dass sie (für alle praktischen Zwecke) als instantan zum Anregungszeitpunkt angesehen werden können. Je nach Zweck einer Messung können sowohl die detektierten Fluoreszenzintensitäten (beispielsweise für Fluoreszenzmikroskopie) als auch die detektierten Streulichtintensitäten (beispielsweise für Raman-Spektroskopie oder - Mikroskopie) zur weiteren Analyse und Bilderzeugung eingesetzt werden. In Ausführungsformen, in denen der Schiebetakt durch die Ausgabe des A/D-Wandlers bestimmt wird, definiert die gerätetechnische Ungenauigkeit in der Einstellung der Verzögerung das Auflösungsvermögen zwischen Streulicht und Fluoreszenzlicht. Die der Schiebefrequenz des Schieberegisters entsprechende Periode kann dann deutlich länger sein als die Verzögerung, ohne dass die Auswerteschaltung an Genauigkeit einbüßt. Bei konstantem Schiebetakt definiert hingegen die Taktperiode das Auflösungsvermögen zwischen Streulicht und Fluoreszenzlicht.

Die gepulste Lichtanregung in Kombination mit der zeitlich markierten Detektion erlaubt mit geringem Aufwand die zeitliche Separation von Fluoreszenzlicht- und Streulichtsignal. Auf diese Weise lassen sich alle oben erwähnten Streulichtformen vollständig unterdrücken und somit effizient vom zeitlich später emittierten Fluoreszenzlicht separieren. Auch das durch Raman-Streuung entstehende Licht wird mittels dieser Methode vollständig unterdrückt. Raman-Streulicht wird unabhängig von dem in der Probe verwendeten Lösungsmittel unterdrückt. Das erlaubt hochempfindliche Untersuchungen von Fluoreszenzemissionen niedrigster Lichtintensität (einer sehr geringen Anzahl fluoreszierender Moleküle), die bisher aufgrund überwiegenden Raman-Streulichts derzeitig nicht möglich sind und deshalb bis jetzt nur rein spektroskopischen Instrumenten hoher Empfindlichkeit zugänglich sind. Messungen von Raman-Spektren profitieren ebenfalls von der hier beschriebenen Methode, wenn nur das emittierte Licht, welches praktisch zeitgleich mit der Probenanregung emittiert wird, spektral analysiert wird. Die zeitliche Separation der Intensitätsanteile kann als Filtervorgang aufgefasst werden, der für die entsprechenden Einsatzzwecke Signale mit besserem Signal-Rausch-Verhältnis zur Verfügung stellt und somit eine Steigerung der Detektionsempfindlichkeit ermöglicht.

Als Beginn eines Lichtpulses kann beispielsweise das Überschreiten (in der ansteigenden Pulsflanke) eines vorgegebenen Anteils (beispielsweise 10% oder 50 %) der maximalen Lichtpuls-Intensität verwendet werden. Das den Beginn eines Lichtpulses anzeigende Signal kann beispielsweise nach optoelektronischer Wandlung des Lichtpulses mit einem entsprechenden Trigger erzeugt werden.

Vorteilhaft sind Ausführungsformen, in denen die Digitalwerte, die vor dem Markierungswert in dem Schieberegister gespeichert sind, und/oder die Digitalwerte, die nach dem Markierungswert in dem Schieberegister gespeichert sind, summiert werden, insbesondere vor der Übertragung der Summe über einen Datenbus zu einem Steuerrechner. Vorzugsweise kann eine Auswerteschaltung zu diesem Zweck eine Ausleseschaltung mit einem Eingang für ein Auslösesignal, mindestens einem Dateneingang, der mit dem Datenausgang des Schieberegisters verbunden ist, und mindestens einen Summenausgang umfassen, wobei die Ausleseschaltung beim Anlegen des Auslösesignals die Registerstufen ausliest und vor dem Markierungswert gespeicherte Digitalwerte summiert und/oder nach dem Markierungswert gespeicherte Digitalwerte summiert und auf dem Summenausgang ausgibt. Die Summierung vor der Übertragung ermöglicht eine Verringerung der benötigten Bandbreite, so dass eine hohe Anregungspulsfrequenz verwendet werden kann.

Beispielsweise kann der Eingang der Ausleseschaltung mit dem Eingang der Verzögerungsschaltung verbunden sein, um das Auslösesignal bereitzustellen. Das Summieren beginnt dann mit dem nächsten Lichtpuls. Alternativ können die die Lichtpulse anzeigenden Signale in einer Schaltung separat verzögert und dann auf den Eingang der Ausleseschaltung gegeben werden. Zweckmäßigerweise ist diese Verzögerung derart, dass das Auslösesignal so vor dem jeweils nächsten Lichtpuls abgegeben wird, so dass der Auslesevorgang spätestens mit diesem nächsten Lichtpuls beendet ist.

Alternativ zur Summierung können die Registerinhalte also Rohdaten gespeichert und/oder übertragen werden.

Es ist möglich, pro Beleuchtungszyklus mehr als einen Markierungswert im Schieberegister zu speichern. Dazu kann die Auswerteschaltung beispielsweise eine entsprechende Anzahl von Verzögerungen (explizit zu diesem Zweck) entgegennehmen oder die zusätzlichen Verzögerungen aus (genau) einer vorgegebenen Verzögerung selbständig ermitteln. Jedes einen Lichtpuls anzeigende Signal gibt sie dann für jede dieser Verzögerungen verzögert aus, beispielsweise mittels einer entsprechenden Anzahl von Verzögerungsschaltungen. Mittels Z derartiger Verzögerungen können beispielsweise Z Markierungswerte im Schieberegister gespeichert werden. Dadurch werden Z+1 Zeitfenster definiert. Das ermöglicht beispielsweise eine Auswertung der Summen dieser Zeitfenster relativ zueinander. Unabhängig davon kann die Auswerteschaltung eine Verzögerung entgegennehmen, welche ein Ende der Detektion (vor Beginn des nächsten Beleuchtungszyklus) angibt.

Vorteilhaft ist es, wenn die Auswerteschaltung mindestens ein zusätzliches Schieberegister und eine Wechselschaltung umfasst, die (für mehrere aufeinanderfolgende Lichtpulse) die Schieberegister abwechselnd mit dem A/D-Wandler, insbesondere auch mit der Verzögerungsschaltung, verbindet. Dadurch kann ein Schieberegister zum Speichern dienen, während ein anderes ausgelesen wird. Beispielsweise kann der Eingang der Wechselschaltung mit dem Eingang der Verzögerungsschaltung verbunden sein. Alternativ können die die Lichtpulse anzeigenden Signale in einer Schaltung separat verzögert und dann auf den Eingang der Wechselschaltung gegeben werden.

Vorzugsweise weist dabei die Auswerteschaltung eine Verzögerungsschaltung mit vorgegebener oder vorgebbarer Verzögerung auf, deren Signaleingang mit dem Pulsgeber oder dem Pulsmonitor verbunden ist. Dabei umfasst das Mikroskop vorzugsweise eine Bedienvorrichtung zum Einstellen der Verzögerung der Verzögerungsschaltung, insbesondere einen Schieber, insbesondere in einer grafischen Benutzeroberfläche einer Steuereinheit als Bedienvorrichtung. Das erlaubt eine Kalibrierung der Verzögerung des einen Lichtpuls anzeigenden Signals zur Speicherung des Markierungswerts, so dass der Markierungswert zum Endzeitpunkt jedes anregenden Lichtpulses im Schieberegister (relativ zum Anfangszeitpunkt) gespeichert wird. Diese Verzögerung ist charakteristisch für die gepulste Lichtquelle, so dass die Kalibrierung für jede gepulste Lichtquelle nur einmal notwendig ist. Vorteilhafterweise kann die Verzögerungsschaltung daher eine einer Dauer der Lichtpulse entsprechende Verzögerung aufweisen, die beispielsweise werksseitig vorgegeben werden kann. Die Einstellung der Verzögerung kann vorzugsweise (auch) durch den Benutzer vorgenommen werden, der somit je nach Applikation die Anregungslichtunterdrückung einstellen könnte: Besseres Signal-Rausch-Verhältnis durch Einstellen einer ersten Verzögerung, bei welcher das verzögerte den Lichtpuls anzeigende Signal (direkt) nach dem Ende des Lichtpulses ausgegeben wird, für eine empfindlichere Messung oder schlechteres Signal-Rausch-Verhältnis durch Einstellen einer ersten Verzögerung, bei welcher das verzögerte den Lichtpuls anzeigende Signal während des Lichtpulses, aber vor dem Ende des Lichtpulses ausgegeben wird, für eine schnellere Messung.

Als Ende eines Lichtpulses kann beispielsweise das Unterschreiten (in der abfallenden Pulsflanke) eines vorgegebenen Anteils (beispielsweise 10% oder 50 %) der maximalen Lichtpuls-Intensität angesehen werden.

Vorteilhaft sind Mikroskopausgestaltungen, in denen die Auswerteschaltung eine oben beschriebene Ausleseschaltung umfasst und zur Übertragung der detektierten Fluoreszenzereignisse über einen Datenbus mit einer Steuereinheit verbunden ist, wobei die Ausleseschaltung vor dem Datenbus angeordnet ist. Die Summierung vor der Übertragung ermöglicht eine Verringerung der benötigten Bandbreite, so dass eine hohe Anregungspulsfrequenz verwendet werden kann.

Besonders vorteilhaft ist ein Mikroskop, insbesondere ein konfokales Rastermikroskop, mit einer für Pulsbetrieb geeigneten Lichtquelle, einem Pulsgeber zur Steuerung der Lichtquelle zur Emission von Lichtpulsen oder einem Pulsmonitor zur Überwachung der erzeugten Lichtpulse, einem optoelektronischen Detektor und einer Verzögerungsschaltung für ein einen Lichtpuls anzeigendes Signal, umfassend eine Schaltung zum zeitweiligen, zumindest partiellen Desaktivieren des Detektors, insbesondere durch Steuern einer Spannung des Detektors, insbesondere einer Dynodenspannung, wobei diese Schaltung so mit dem Ausgang der Verzögerungsschaltung verbunden ist, dass der Detektor durch die Ausgabe des verzögerten Signals desaktiviert, insbesondere derart, dass der Detektor auf ihn einfallendes Licht nicht verstärkt. Als Schaltung zum Steuern einer Spannung des Detektors kann beispielsweise eine Schaltung gemäß US 2011/149388 A1, eingesetzt werden. Auswerteschaltungen mit Shieberegistern sind aus DE 102008029458 A1, DE 2604460 A1 und WO 01/63223 A2 bekannt.

Statt der oder zusätzlich zu der zeitlich separierten Datenerfassung bei kontinuierlich aktivem Detektor kann der Detektor selbst auf diese Weise nur periodisch aktiviert werden, beispielsweise zum Zeitpunkt t_{AN} nach jedem anregenden Lichtpuls Einschalten der Verstärkung und zum Zeitpunkt t_{AUS} nach jedem anregenden Lichtpuls Ausschalten der Verstärkung, während beispielsweise die Datenaufnahme in das Schieberegister oder einen anderen Speicher kontinuierlich durchläuft. Der Vorteil ist, dass es im Falle der Fluoreszenzdetektion zu keiner "Blendung" und Übersteuerung des Detektors kommen kann, wenn dieser den im Vergleich zur nachfolgenden Fluoreszenz typischerweise hohen Lichtintensitäten während der Anregung ausgesetzt wird. Der Zeitpunkt t_{AN} wird zu diesem Zweck so vorgegeben, dass er im wesentlich nach dem Ende des Anregungspulses liegt oder mit diesem zusammenfällt. Zu diesem Zweck verzögert die Verzögerungsschaltung beispielsweise ein einen Lichtpuls anzeigendes Signal um die Dauer Δt_{AN}. Eine zweite Verzögerungsschaltung kann das Signal um die Dauer Δt_{AUS} verzögern und ausgeben, woraufhin die Detektorspannung wieder so umgeschaltet wird, dass die Verstärkung ausgeschaltet ist. Alternativ kann diese Umschaltung beim Auftreten eines einen Lichtpuls anzeigenden Signals erfolgen (entspricht Δt_{AUS}=0).

In einer nicht erfindungsgemäßen Ausgestaltung kann Anstelle eines Schieberegisters mit äquivalenter Wirkung ein Zähler angeordnet und verwendet werden, der wahlweise entweder
- ab der Ausgabe des verzögerten lichtpulsanzeigenden Signals durch die Verzögerungsschaltung bis zu einem zweiten verzögerten Signal oder bis zum nächsten (unverzögerten) lichtpulsanzeigenden Signal um die vom A/D-Wandler ausgegebenen Digitalwerte inkrementiert wird, um Fluoreszenzereignisse zu zählen, oder
- ab dem (unverzögerten) lichtpulsanzeigenden Signal bis zur Ausgabe des verzögerten lichtpulsanzeigenden Signals durch die Verzögerungsschaltung um die vom A/D-Wandler ausgegebenen Digitalwerte inkrementiert wird, um Streulicht-Ereignisse zu zählen.

Es ist auch möglich, zwei Zähler anzuordnen, wovon der eine um die ab der Ausgabe des verzögerten lichtpulsanzeigenden Signals durch die Verzögerungsschaltung bis zu einem zweiten verzögerten Signal oder bis zum nächsten (unverzögerten) lichtpulsanzeigenden Signal vom A/D-Wandler ausgegebenen Digitalwerte inkrementiert wird und der andere um die ab dem (unverzögerten) lichtpulsanzeigenden Signal bis zur Ausgabe des verzögerten lichtpulsanzeigenden Signals durch die Verzögerungsschaltung um die vom A/D-Wandler ausgegebenen Digitalwerte inkrementiert wird.

Zusätzlich zur zeitlichen Trennung von Fluoreszenz- und Streulicht kann eine spektrale Trennung erfolgen. Insbesondere kann Streulicht nach einer räumlichspektralen Aufspaltung vor dem Detektor spektral selektiv blockiert werden, beispielsweise durch ein Hindernis mit einer der Linienbreite einer Anregungslinie und/oder einer Raman-Streuung entsprechenden Breite.

Nachfolgend wird die Erfindung anhand von Ausführungsbeispielen näher erläutert.

In den Zeichnungen zeigen:
Fig. 1. ein Mikroskop mit einer Auswerteschaltung in schematischer Darstellung,
Fig. 2 eine erste Auswerteschaltung mit einem Schieberegister in schematischer Darstellung,
Fig. 3 ein Diagramm zur Verdeutlichung der Zuordnung von Fluoreszenzereignissen zu Registerstufen bei der ersten Auswerteschaltung,
Fig. 4 eine zweite Auswerteschaltung mit zwei Schieberegistern in schematischer Darstellung.
Fig. 5 eine dritte Auswerteschaltung mit einem Schieberegister in schematischer Darstellung und
Fig. 6 ein Diagramm zur Verdeutlichung der Zuordnung von Fluoreszenzereignissen zu Registerstufen bei der zweiten Auswerteschaltung.

In allen Zeichnungen tragen übereinstimmende Teile gleiche Bezugszeichen.

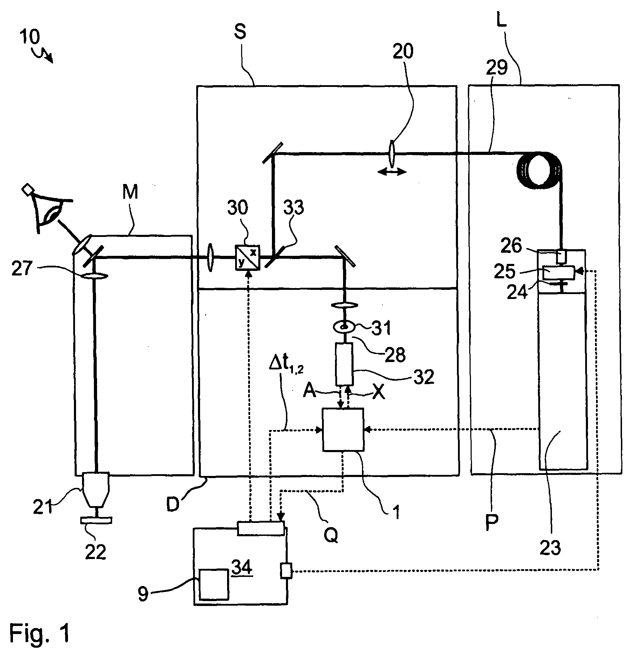

In **Fig. 1** ist eine Auswerteschaltung 1 in einem Laser-Scanning-Mikroskop 10 (LSM) schematisch dargestellt. Das LSM 10 ist modular aus einem Beleuchtungsmodul L mit einem gepulsten Laser als Lichtquelle 23, einem Abtastmodul S (engl. "scanning module"), einem Detektionsmodul D und der Mikroskopeinheit M mit dem Mikroskopobjektiv 21 zusammengesetzt.

Das Licht des Lasers 23 kann durch eine Lichtklappe 24 und einen Abschwächer 25, beispielsweise ein akustooptischer einstellbarer Filter (engl. "acousto-optic tunablefilter"; AOTF), von der Steuereinheit 34 beeinflusst werden, bevor es über den Faserkoppler 26, die Lichtleitfasern 29 und die Koppeloptik 20 in die Abtasteinheit S eingespeist wird. Über den Hauptstrahlteiler 33 und die X-Y-Abtasteinheit 30 (engl. "scanner"), die beispielsweise zwei Galvanometerspiegel aufweist (nicht dargestellt), gelangt es durch das Mikroskopobjektiv 21 zur Probe 22, wo es ein Fokusvolumen (nicht abgebildet) beleuchtet. Die gepulste Lichtquelle 23 gibt mit jedem Lichtpuls ein den Beginn des Lichtpuls anzeigendes Signal P aus, beispielsweise mittels eines Triggers, der an eine Monitordiode angeschlossen ist und so die ansteigende Flanke der Beleuchtungsintensität anzeigt.

In anderen Ausführungsformen (nicht abgebildet) können die Einkopplung in Lichtleitfasern und insbesondere die Lichtleitfasern entfallen.

In der Probe 22 gestreutes Licht und emittiertes Fluoreszenzlicht gelangt durch das Mikroskopobjektiv 21 und weiter über die Abtasteinheit 30 durch den Hauptstrahlteiler 33 in das Detektionsmodul D. Der Hauptstrahlteiler 33 kann beispielsweise als dichroitischer Farbteiler ausgebildet sein, um Anregungslicht möglichst weitgehend vom Detektionsmodul D fernzuhalten. Das Detektionsmodul D weist beispielhaft einen Detektionskanal mit einer Lochblende 31, einem Filter 28 und einem Detektor 32, beispielsweise einem Photovervielfacher (PMT), auf. Der Detektor 32 ist beispielsweise mit einer Betriebsschaltung gemäß US 2001/0015411 A1 ausgerüstet. Anstelle einer Lochblende 31 kann, beispielsweise bei linienförmiger Beleuchtung, auch eine Schlitzblende (nicht abgebildet) verwendet werden. Die konfokale Lochblende 31 dient der Diskriminierung von Probenlicht, das nicht aus dem Fokusvolumen stammt. Der Detektor 32 detektiert daher ausschließlich Licht aus dem Fokusvolumen. Er ist mit einer Auswerteschaltung 1 verbunden. In anderen Ausführungsformen (nicht dargestellt) kann die Auswerteschaltung 1 in den Detektor 32 integriert sein, alternativ kann sie außerhalb des Detektionsmoduls D angeordnet sein.

Das konfokal beleuchtete und aufgenommene Fokusvolumen kann mittels der Abtasteinheit 30 entlang eines Rasters durch die Probe 22 bewegt werden, um pixelweise ein Bild aufzunehmen, indem die Galvanometerspiegel der Abtasteinheit 30 gezielt verdreht werden. Sowohl die Bewegung der Galvanometerspiegel als auch das Schalten der Beleuchtung mittels der Lichtklappen 24 oder der Abschwächer 25 als auch die Auswerteschaltung 1 werden von der Steuereinheit 34 über eine oder mehrere entsprechende Schnittstellen gesteuert. Insbesondere kann die Steuereinheit 34 der Auswerteschaltung 1 eine erste Verzögerung Δt₁ und optional eine zweite Verzögerung Δt₂ vorgeben. Die Steuereinheit kann mit einem jeweiligen Schieber zur Einstellung der Verzögerungen Δt₁, Δt₂ ausgerüstet sein, um einem Benutzer zu erlauben, die Verzögerungen Δt₁, Δt₂ einzustellen. Derartige Schieber können beispielsweise mittels einer grafischen Benutzeroberfläche in einem Anzeigegerät der Steuereinheit 34 als Bedienelemente bereitgestellt werden, wo der Benutzer sie mittels einer Maus oder mittels eines berührungsempfindlichen Mediums betätigen kann.

Die Auswerteschaltung 1 ist zudem mit der Lichtquelle 23 verbunden, welche, beispielsweise mittels einer mit dem Strahlengang gekoppelten Monitordiode (nicht abgebildet), der ein Trigger nachgeschaltet ist, an die Auswerteschaltung 1 mit Beginn jedes Lichtpulses ein den Lichtpuls anzeigendes Signal P (das Triggersignal) ausgibt. Der Detektor 32 gibt sein Intensitätssignal A, im Falle des PMT ist es das analoge Anodensignal, an die Auswerteschaltung 1 ab, die daraus digitale Intensitätswerte Q ermittelt. Seine Betriebsschaltung nimmt beispielsweise ein Schaltsignal X zur Schnellabschaltung seiner Verstärkungsfunktion von der Auswerteschaltung 1 entgegen. Diese Betriebsschaltung und die Mittel zum Übertragen des Schaltsignals X können in anderen Ausführungsformen entfallen.

Die Datenaufnahme der Intensitätswerte Q von der Auswerteschaltung 1 des Detektors 32 erfolgt durch die Steuereinheit 34. Die Auswerteeinheit/Steuereinheit 34 kann beispielsweise ein handelsüblicher elektronischer Rechner (engl. "computer") sein. Zur Übertragung der Daten F und Δt_{1(.2)} ist die Steuereinheit 34 mit der Auswerteschaltung 1 verbunden, beispielsweise über einen Datenbus auf Basis von LVDS.

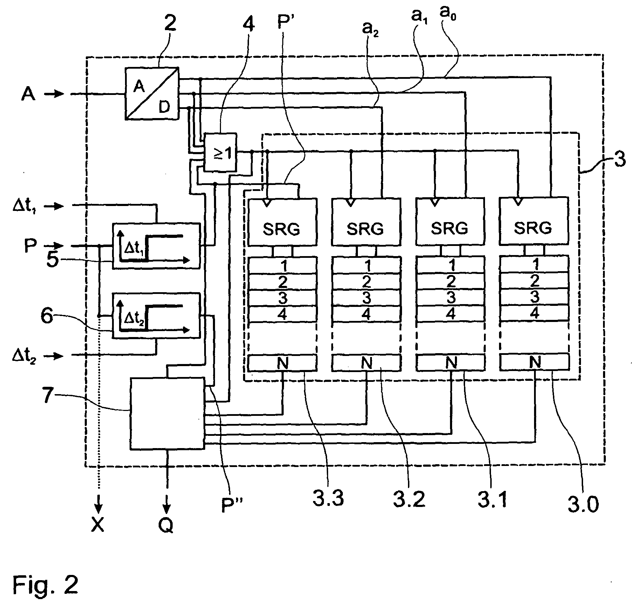

**Fig.** 2 zeigt schematisch eine erste Auswerteschaltung 1, die beispielsweise in dem Mikroskop 10 gemäß Fig. 1 eingesetzt werden kann. Sie kann mittels einer feldprogrammierbaren Logikgatteranordnung (engl. "field-programmable gate array"; FPGA) realisiert werden. Sie umfasst einen Analog-Digital-Wandler 2, ein Schieberegister 3 (SRG), ein Verknüpfungsgatter 4, eine erste Verzögerungsschaltung 5, eine zweite Verzögerungsschaltung 6 und eine Ausleseschaltung 7. Der ADC 2 weist beispielsweise drei Quantisierungsstufen auf und kann daher maximal 7 Photonen, deren Intensitätskurven sich zeitlich überlappen, zählen und die Anzahl als Digitalwert a ausgeben. Zu diesem Zweck ist er beispielsweise an eine Referenzspannung angeschlossen, die einem Intensitätssignal A von sieben zeitlich zusammenfallenden Fluoreszenzereignissen entspricht. Das SRG 3 ist vier Bits breit, also ein Bit breiter als zur Speicherung der Digitalwerte a notwendig, und N Bits lang, beispielsweise N=64. Intern ist es beispielsweise aus vier Schieberegistern 3.0, 3.1, 3.2 und 3.3 einer Breite von jeweils einem Bit und einer Länge von jeweils N=64 aufgebaut.

Die Auswerteschaltung 1 kann beispielsweise als Steckmodul ausgebildet sein, so dass es mit geringem Aufwand gegen eine andere Auswerteschaltung austauschbar ist. Zu diesem Zweck können Steckkontakte für die Entgegennahme des Detektorsignals A, des einen Beginn eines Lichtpulses anzeigenden Signals P und der Verzögerungen Δt₁ und Δt₂ und für die Ausgabe von Intensitätswerten Q und optional des Schaltsignals X vorgesehen sein. Da die zweite Verzögerung nur von der Dauer des beleuchtenden Lichtpulses abhängt, kann anstelle der Entgegennahme als Variable die erste Verzögerung Δt₁ fest vorgegeben werden.

Drei Bits des Dateneingangs des SRG 3 sind mit dem Ausgang des ADC 2 so verbunden, dass der momentan vom ADC 2 ausgegebene Digitalwert a an der Eingangsstufe des SRG 3 anliegt. Das vierte Bit des Dateneingangs des SRG 3 ist mit dem Ausgang der ersten Verzögerungsschaltung 5 verbunden und dient dadurch zur Speicherung eines Markierungsbits als Markierungswert für den Ablauf der eingestellten ersten Verzögerung Δt₁ im aktuellen Beleuchtungszyklus.

Der Takteingang des SRG 3 ist über das Oder-Verknüpfungsgatter 4 ebenfalls mit dem Ausgang des ADC 2 verbunden. Über dasselbe Gatter 4 ist er auch mit der Auswerteschaltung 1 und mit der ersten Verzögerungsschaltung 5 verbunden. Das Oder-Gatter 4 bewirkt, dass die Inhalte der Registerstufen in die jeweils nächste Registerstufe verschoben werden, wenn mindestens einer der Eingänge des Verknüpfungsgatters 4 gesetzt wird. Beispielsweise wird, sobald durch die Wandlung des Intensitätssignals A im ADC 2 mindestens eines der Datenbits a₀, a₁, a₂ gesetzt wird, der aus diesen Bits bestehende Digitalwert a im SRG 3 gespeichert. Eine Speicherung erfolgt auch dann, wenn die erste Verzögerungsschaltung 5 um die Dauer Δt₁ nach dem Eintreffen des einen Lichtpuls anzeigenden Signals P das verzögerte Signal P' ausgibt. Der momentane Digitalwert a wird dann neben dem Markierungsbit im SRG 3 gespeichert.

Anstelle der direkten Verbindung des Oder-Gatters 4 mit dem Ausgang des ADC 2 kann in alternativen Ausführungsformen (nicht abgebildet) ein digitaler Komparator zwischen den ADC 2 und das Oder-Gatter 4 geschaltet sein, der den anliegenden Digitalwert a mit dem in der ersten Registerstufe gespeicherten Wert vergleicht und seinen Ausgang ausschließlich dann setzt, wenn sich der gespeicherte Wert vom momentanen Digitalwert a unterscheidet. Auf diese Weise können auch Abfolgen von abnehmenden (von Null verschiedenen) Intensitätswerten A gespeichert werden.

Nach Ablauf der zweiten Verzögerung Δt₂ gibt die zweite Verzögerungsschaltung 6 das zweite verzögerte Signal P" aus und zeigt damit das Ende der Aufzeichnung im momentanen Beleuchtungszyklus an. Zweckmäßigerweise wird die zweite Verzögerung Δt₂ so vorgegeben, dass die verbleibende Zeit vom zweiten verzögerten Signal P" bis zum nächsten einen Beginn eines Lichtpulses anzeigenden Signal P ausreicht, um das Schieberegister auszulesen. Da die nötige verbleibende Zeit nur von der Länge des SRG 3 und dessen maximalen Taktfrequenz abhängt, kann anstelle der Entgegennahme von der Steuereinheit als Variable die zweite Verzögerung Δt₂ fest vorgegeben werden.

Während eines jeden Beleuchtungszyklus nimmt die Ausleseschaltung 7 parallel zum SRG 3 dessen Taktsignal entgegen, um die Anzahl W der gefüllten Registerstufen zu zählen. Sobald die Ausleseschaltung 7 das zweite verzögerte Signal P" empfängt, schiebt sie das Schieberegister um die N-W ungenutzten Stufen und liest dann seriell jeweils die letzte Stufe des SRG 3 aus und verschiebt den Inhalt des SRG 3 um eine Stufe, indem sie einen Eingang des Oder-Gatters 4 setzt und wieder zurücksetzt. Alternativ zum seriellen Auslesen kann die Ausleseschaltung 7 auch so mit dem SRG 3 verbunden sein, dass es mehrere oder alle Stufen parallel auslesen kann.

Die Ausleseschaltung summiert die aus dem SRG 3 ausgelesenen 3-Bit-Digitalwerte a in einem ersten Zähler solange, bis sie im vierten Bit einer Registerstufe das Markierungsbit identifiziert. Dann summiert sie die übrigen 3-Bit-Digitalwerte a in einem zweiten Zähler. Die Zähler können nach dem letzten Digitalwert a als digitale Intensitätswerte Q ausgegeben und dann initialisiert werden. Alternativ werden sie über mehrere Beleuchtungszyklen fortgezählt und erst dann ausgegeben. Wenn nur Streuintensitäten gemessen werden sollen, können die Zählung und Ausgabe auf den ersten Zähler beschränkt sein. Entsprechend können die Zählung und Ausgabe auf den zweiten Zähler beschränkt sein, wenn nur Fluoreszenzereignisse gemessen werden sollen. Die Ausleseschaltung 7 benötigt in solchen Ausführungsformen nur einen Zähler.

Das den Lichtpuls anzeigende Signal P wird von der Auswerteschaltung 1 beispielsweise ohne Manipulation als Schaltsignal X zum Detektor 2 durchgereicht. Dieser schaltet daraufhin eine seiner Betriebsspannungen, beispielsweise die erste Dynodenspannung, ab oder um oder verringert sie zumindest, und schützt sich so vor Blendung durch eine hohe Lichtintensität zu schützen. Alternativ zum einfachen Weiterreichen des den Lichtpuls anzeigenden Signals P als Schaltsignal X könnte die Auswerteschaltung 1 oder eine separate Schaltung (nicht abgebildet) das Zurücksetzen des Schaltsignals X verzögern, beispielsweise mittels eines Abtast-Halte-Glieds (engl. "sample and hold circuit").

Um zusätzlich oder alternativ zu Fluoreszenzereignissen Ramanstreuung aufnehmen zu können, darf der Detektor während des beleuchtenden Lichtpulses nicht desaktiviert werden. Die Ausleseschaltung 1 kann das Schaltsignal X daher in alternativen Ausführungsformen vollständig unterdrücken. Vorzugsweise nimmt die Auswerteschaltung 1 von der Steuereinheit 34 ein weiteres Signal entgegen, anhanddessen sie erkennt, ob Schaltsignale X erzeugt oder unterdrückt werden sollen.

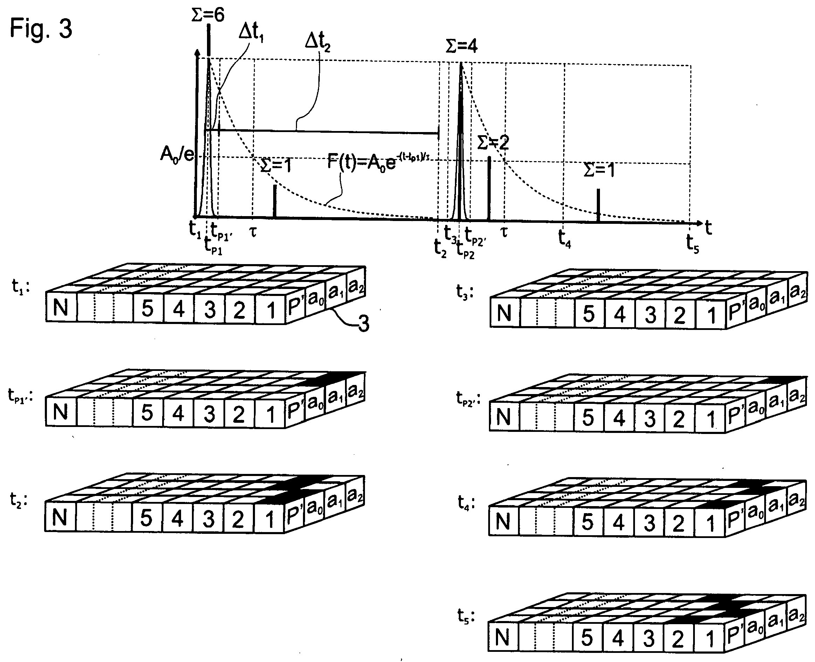

In **Fig. 3** sind eine Abfolge von Fluoreszenzereignissen und die darauf resultierenden Einträge in das Schieberegister 3 dargestellt, wenn eine Auswerteeinheit gemäß Fig. 2 verwendet wird. Das Schieben des SRG 3 erfolgt in der Abbildung nach links. In den Beleuchtungszyklen ist der Verlauf des beleuchtenden Lichtimpulses neben der exponentiellen Abklingkurve der Fluoreszenz angedeutet. Detektierte Photonen sind durch fett gezeichnete Striche angedeutet. Im ersten Beleuchtungszyklus [t₁, t₃[ werden vom Detektor 2 beispielhaft zunächst sechs gestreute Photonen und später ein einzelnes Fluoreszenzereignis detektiert. Im zweiten Beleuchtungszyklus [t₃, t₅[ werden beispielhaft zunächst vier gestreute Photonen, danach zwei gleichzeitig auftretende Fluoreszenzereignisse und später ein einzelnes Fluoreszenzereignis detektiert.

Der Stand des SRG 3 ist zu fünf verschiedenen Zeitpunkten dargestellt. Am Beginn jedes Beleuchtungszyklus (t1, t3, ...) ist es leer. Zu den späteren Zeitpunkten sind die gesetzten Bits durch schwarze Felder markiert. Es ist erkennbar, wie bereits gespeicherte Digitalwerte a erhalten bleiben und nach links geschoben werden, wenn neue Digitalwerte a ermittelt wurden. Da das SRG 3 nur bei Bedarf, also bei tatsächlich detektierten Photonen geschoben wird, befindet sich das Markierungsbit für das Auftreten des verzögerten Signals P' am Ende eines Beleuchtungszyklus nicht immer in derselben Registerstufe.

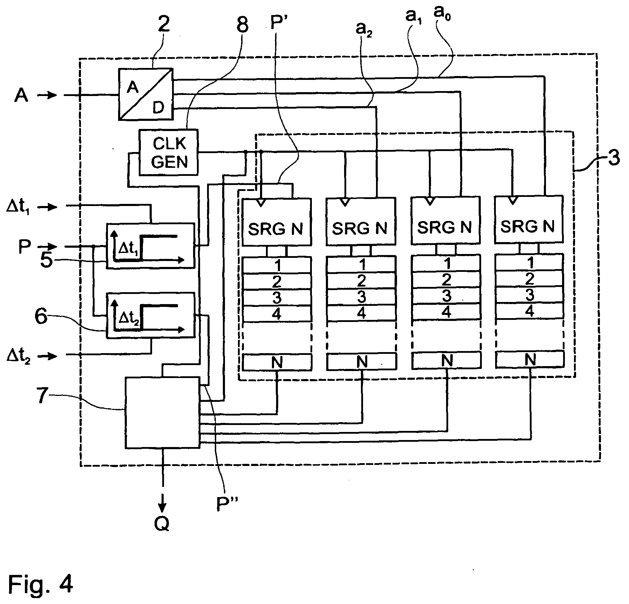

**Fig. 4** zeigt schematisch eine zweite Auswerteschaltung 1, die beispielsweise in Fig. 1 eingesetzt werden kann. Im Unterschied zu der in Fig. 2 gezeigten Auswerteschaltung 1 weist sie kein Verknüpfungsgatter, sondern einen Taktgenerator 8 auf, der das Schieberegister 3 am Takteingang mit einem festen Takt beaufschlagt und so kontinuierlich verschiebt. Die Ausleseschaltung 7 kann den Taktgenerator 8 ein- und ausschalten. In weitergehenden Ausführungsformen kann sie auch die Taktfrequenz einstellen, beispielsweise gemäß einem weiteren von der Steuereinheit 34 entgegenzunehmenden Signal F (nicht abgebildet).

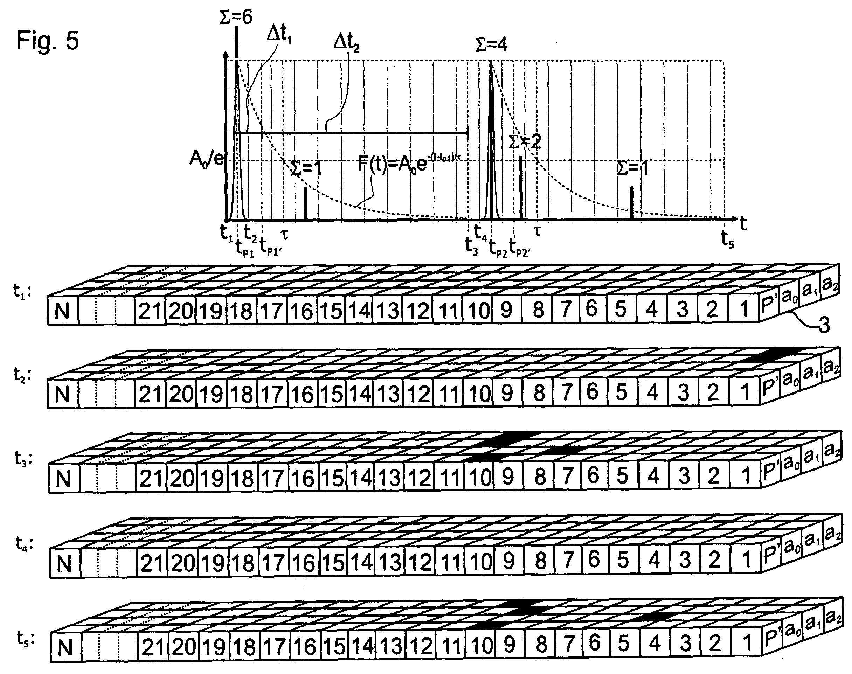

In **Fig. 5** sind eine Abfolge von Fluoreszenzereignissen und die darauf resultierenden Einträge in das Schieberegister 3 dargestellt, wenn eine Auswerteeinheit gemäß Fig. 4 verwendet wird. Erkennbar ist, dass das Markierungsbit für das verzögerte Signal P' aufgrund des festen Takts unabhängig von der Detektion von Photonen in jedem Beleuchtungszyklus in derselben Stufe liegt.

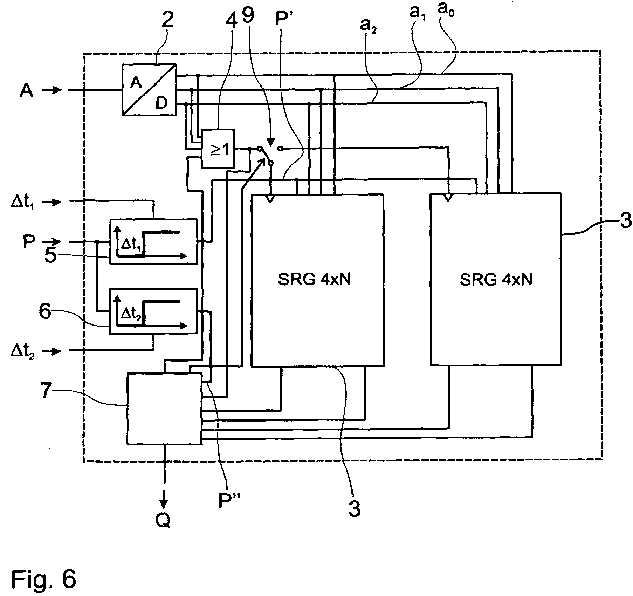

**Fig. 6** zeigt schematisch eine dritte Auswerteschaltung 1, die beispielsweise in Fig. 1 eingesetzt werden kann. Zusätzlich zu der in Fig. 2 gezeigten Auswerteschaltung 1 weist sie ein zweites Schieberegister 3 auf. Die beiden Schieberegister 3 werden abwechselnd zur Speicherung benutzt, indem der Schalter 9 umgeschaltet wird. Bei ungeradzahligen Lichtpulsen werden die im betreffenden Messintervall auftretenden Fluoreszenzereignisse in das erste Schieberegister 3 gespeichert, bei geradzahligen Lichtpulsen werden die im betreffenden Messintervall auftretenden Fluoreszenzereignisse in das zweite Schieberegister 3 gespeichert. Während in das eine Schieberregister 3 gespeichert wird, kann das andere ausgelesen werden. Dadurch kann beispielsweise die zweite Verzögerungsschaltung 6 entfallen, wenn die Ausleseschaltung 7 das unverzögerte Signal P entgegennimmt und den Schalter 9 umschaltet, sobald sie ein solches Signal P detektiert. Das jeweils nicht mit dem Gatter 4 verbundene SRG 3 kann sie dann mittels einer separaten Taktleitung (der Übersichtlichkeit halber nicht abgebildet) seriell oder alternativ parallel auslesen.

Auch in einer Ausführungsform gemäß Fig. 2 können zwei (oder mehr) Schieberegister 3 alternierend zum Speichern und Auslesen geschaltet sein.

In nicht erfindungsgemäßen Ausführungsformen kann anstelle eines Analog-Digital-Wandlers ein einfacher Trigger verwendet werden. Mehrere zeitlich zusammenfallende Fluoreszenzereignisse werden dann als nur ein einziges gezählt. Es gehen so zwar detektierte Photonen verloren, aber das Schieberegister braucht dann für die Digitalwerte nur ein Bit aufzuweisen. Für den Markierungswert kann daneben ein weiteres Bit vorgesehen sein, so dass das Schieberegister beispielsweise nur eine Breite von zwei Bit aufweist.

### Bezugszeichenliste

- 1: Auswerteschaltung
- 2: Analog-Digital-Wandler
- 3: Schieberegister
- 4: Oder-Verknüpfungsgatter
- 5: Erste Verzögerungsschaltung
- 6: Zweite Verzögerungsschaltung
- 7: Ausleseschaltung
- 8: Taktgenerator
- 9: Umschalter
- 10: Laser-Scanning-Mikroskop
- 20: Kollimationsoptik
- 21: Mikroskopobjektiv
- 22: Probe
- 23: Laser
- 24: Lichtklappe
- 25: Abschwächer
- 26: Faserkoppler
- 27: Tubuslinse
- 28: Filter
- 29: Dichroitischer Strahlteiler
- 30: Abtasteinheit
- 31: Lochblende
- 32: Photovervielfacher
- 33: Hauptstrahlteiler
- 34: Steuereinheit
- 35: Lichtquelle

## Patentansprüche

1. Mikroskop (10), insbesondere konfokales Rastermikroskop, mit einer für Pulsbetrieb geeigneten Lichtquelle (23), einem Pulsgeber zur Steuerung der Lichtquelle zur Emission von Lichtpulsen oder einem Pulsmonitor zur Überwachung der erzeugten Lichtpulse und einem optoelektronischen Detektor (32), **gekennzeichnet durch** eine Auswerteschaltung (1) zum Auswerten der elektrischen Signale (A) des optoelektronischen Detektors (32), insbesondere bei der Aufnahme von Fluoreszenzereignissen unter Anregung mittels Lichtpulsen, umfassend einen Analog-Digital-Wandler (2) mit einem Eingang zur Verbindung mit einem Ausgang des Detektors (32) und mit einem Ausgang zur Ausgabe eines Digitalwerts (a), einem Schieberegister (3) mit mindestens einem Dateneingang, einem Takteingang, mehreren Registerstufen und mindestens einem Datenausgang, wobei der Ausgang des Analog-Digital- Wandlers (2) mit dem Dateneingang des Schieberegisters (3) verbunden ist und wobei der Eingang des Analog-Digital-Wandlers (2) mit dem Ausgang des Detektors (32) verbunden ist.

2. Mikroskop (10) nach Anspruch 1, wobei der Ausgang des Analog-Digital-Wandlers (2) auch mit dem Takteingang des Schieberegisters (3) verbunden ist.

3. Mikroskop (10) nach Anspruch 1, umfassend einen Taktgeber (8) mit einer vorgegebenen oder vorgebbaren Taktfrequenz, der mit dem Takteingang des Schieberegisters (3) verbunden ist.

4. Mikroskop (10) nach einem der vorhergehenden Ansprüche, umfassend mindestens ein zusätzliches Schieberegister (3) und eine Wechselschaltung (9), die (für mehrere aufeinanderfolgende Lichtpulse) die Schieberegister (3) abwechselnd mit dem A/D-Wandler (2), insbesondere auch mit der Verzögerungsschaltung (5), verbindet.

5. Mikroskop (10) nach einem der vorhergehenden Ansprüche, wobei die Auswerteschaltung (1) eine Verzögerungsschaltung (5) mit variabel einstellbarer zeitlicher Verzögerung (Δt1) aufweist, die einen Eingang für ein Signal (P), der mit dem Pulsgeber oder dem Pulsmonitor verbunden ist, und einen Ausgang zur Ausgabe des Signals nach der eingestellten Verzögerung (Δt1) aufweist, wobei der Ausgang der Verzögerungsschaltung (5) derart mit dem Dateneingang des Schieberegisters (3) verbunden ist, dass durch die Ausgabe des verzögerten Signals (P') an dem Dateneingang neben dem oder statt dem Digitalwert (a) ein Markierungswert, insbesondere ein Nullwert, anliegt.

6. Mikroskop (10) nach dem vorhergehenden Anspruch, wobei die Verzögerungsschaltung (5) eine Verzögerungsdauer aufweist, welche einer Dauer der Lichtpulse entspricht.

7. Mikroskop (10) nach Anspruch 5 oder 6, aufweisend eine Bedienvorrichtung zum Einstellen der Verzögerung der Verzögerungsschaltung, insbesondere einen Schieber, insbesondere in einer grafischen Benutzeroberfläche einer Steuereinheit (34) als Bedienvorrichtung.

8. Mikroskop (10) nach einem der vorhergehenden Ansprüche, wobei die Auswerteschaltung (1) eine Ausleseschaltung (7) mit einem Eingang für ein Auslösesignal, mindestens einem Dateneingang, der mit dem Datenausgang des Schieberegisters (3) verbunden ist, und mindestens einem Summenausgang, wobei die Ausleseschaltung (7) beim Anlegen des Auslösesignals die Registerstufen ausliest und vor dem Markierungswert gespeicherte Digitalwerte (a) summiert und/oder nach dem Markierungswert gespeicherte Digitalwerte (a) summiert und auf dem Summenausgang ausgibt, umfasst und zur Übertragung der detektierten Fluoreszenzereignisse über einen Datenbus mit einer Steuereinheit (34) verbunden ist, wobei die Ausleseschaltung (7) vor dem Datenbus angeordnet ist.

9. Verfahren zum Aufzeichnen von Fluoreszenzereignissen, wobei Lichtpulse mittels einer Lichtquelle (23) auf eine Probe (22) eingestrahlt werden und mittels eines optoelektronischen Detektors (32) in einem Mikroskop (10) nach Anspruch 1 Licht von der Probe (22) aufgenommen und in ein elektrisches Signal gewandelt und einem Analog-Digital-Wandlers (2) zugeführt wird und der vom Analog-Digital-Wandler (2) ausgegebene Digitalwert (a) in einer Eingangsstufe eines Schieberegisters (3) gespeichert wird.

10. Verfahren nach Anspruch 9, wobei der Inhalt des Schieberegisters (3) bei Auftreten eines von Null verschiedenen Digitalwerts (a) um eine Stufe verschoben wird.

11. Verfahren nach Anspruch 9, wobei der Inhalt des Schieberegisters (3), insbesondere mittels eines Taktgebers (3), wiederholt nach einer vorgegebenen Zeit um eine Stufe verschoben wird.

12. Verfahren nach einem der vorhergehenden Verfahrensansprüche, wobei ein mit den Lichtpulsen synchronisiertes Signal (P) identifiziert wird und um eine vorgegebene oder vorgebbare Zeit danach ein Markierungswert neben dem oder statt dem Digitalwert (a) in der Eingangsstufe gespeichert wird.

13. Verfahren nach dem vorhergehenden Verfahrensanspruch, wobei die Digitalwerte (a), die vor dem Markierungswert in dem Schieberegister (3) gespeichert sind, und/oder die Digitalwerte (a), die nach dem Markierungswert in dem Schieberegister (3) gespeichert sind, summiert werden, insbesondere vor der Übertragung der Summe über einen Datenbus zu einem Steuerrechner (34).

## Claims

1. Microscope (10), in particular confocal scanning microscope, comprising a light source (23) suitable for pulsed operation, a pulse generator for controlling the light source for emitting light pulses or a pulse monitor for monitoring the generated light pulses and an optoelectronic detector (32),
**characterized by** an evaluation circuit (1) for evaluating the electrical signals (A) of the optoelectronic detector (32), in particular during the recording of fluorescence events with excitation by means of light pulses, comprising an analogue-to-digital converter (2) having an input for connection to an output of the detector (32) and having an output for outputting a digital value (a), a shift register (3) having at least one data input, a clock input, a plurality of register stages and at least one data output, wherein the output of the analogue-to-digital converter (2) is connected to the data input of the shift register (3), and wherein the input of the analogue-to-digital converter (2) is connected to the output of the detector (32).

2. Microscope (10) according to Claim 1, wherein the output of the analogue-to-digital converter (2) is also connected to the clock input of the shift register (3).

3. Microscope (10) according to Claim 1, comprising a clock generator (8) having a predefined or predefinable clock frequency, said clock generator being connected to the clock input of the shift register (3).

4. Microscope (10) according to any of the preceding claims, comprising at least one additional shift register (3) and a two-way circuit (9), which (for a plurality of successive light pulses) connects the shift registers (3) alternately to the A/D converter (2), in particular also to the delay circuit (5).

5. Microscope (10) according to any of the preceding claims, wherein the evaluation circuit (1) has a delay circuit (5) having a variably adjustable temporal delay (Δt1), which has an input for a signal (P), said input being connected to the pulse generator or the pulse monitor, and an output for outputting the signal after the set delay (Δt1), wherein the output of the delay circuit (5) is connected to the data input of the shift register (3) in such a way that a marking value, in particular a zero value, is present alongside or instead of the digital value (a) at the data input as a result of the outputting of the delayed signal (P').

6. Microscope (10) according to the preceding claim, wherein the delay circuit (5) has a delay duration corresponding to a duration of the light pulses.

7. Microscope (10) according to Claim 5 or 6, comprising an operating device for setting the delay of the delay circuit, in particular a slide, in particular in a graphical user interface of a control unit (34) as operating device.

8. Microscope (10) according to any of the preceding claims, wherein the evaluation circuit (1) comprises a read-out circuit (7) having an input for a trigger signal, at least one data input connected to the data output of the shift register (3), and at least one summation output, wherein, when the trigger signal is applied, the read-out circuit (7) reads the register stages and sums digital values (a) stored before the marking value and/or sums digital values (a) stored after the marking value and outputs the sum on the summation output, and the evaluation circuit is connected to a control unit (34) via a data bus for the transmission of the detected fluorescence events, wherein the read-out circuit (7) is arranged upstream of the data bus.

9. Method for recording fluorescence events, wherein light pulses are radiated onto a sample (22) by means of a light source (23) and, by means of an optoelectronic detector (32) in a microscope (10) according to Claim 1, light from the sample (22) is captured and converted into an electrical signal and fed to an analogue-to-digital converter (2), and the digital value (a) output by the analogue-to-digital converter (2) is stored in an input stage of a shift register (3).

10. Method according to Claim 9, wherein the content of the shift register (3) is shifted by one stage when a digital value (a) different from zero occurs.

11. Method according to Claim 9, wherein the content of the shift register (3) is shifted by one stage, in particular by means of a clock generator (3), repeatedly after a predefined time.

12. Method according to any of the preceding method claims, wherein a signal (P) synchronised with the light pulses is identified and around a predefined or predefinable time thereafter a marking value is stored alongside or instead of the digital value (a) in the input stage.

13. Method according to the preceding method claim, wherein the digital values (a) stored before the marking value in the shift register (3) and/or the digital values (a) stored after the marking value in the shift register (3) are summed, in particular before the transmission of the sum via a data bus to a control computer (34).

## Revendications

1. Microscope (10), notamment microscope à balayage confocal, comportant une source lumineuse (23) appropriée pour un fonctionnement pulsé, un générateur d'impulsions destiné à commander la source lumineuse afin qu'elle émette des impulsions lumineuses, ou un dispositif de surveillance d'impulsions destiné à surveiller des impulsions lumineuses générées et un détecteur optoélectronique (32),
**caractérisé par** un circuit d'évaluation (1) destiné à évaluer des signaux électriques (A) du détecteur optoélectronique (32), notamment lors de l'acquisition d'événements de fluorescence par excitation au moyen d'impulsions lumineuses, comprenant un convertisseur analogique-numérique (2) comportant une entrée destinée à être connectée à une sortie du détecteur (32) et comportant une sortie destinée à délivrer une valeur numérique (a), un registre à décalage (3) comportant au moins une entrée de données, une entrée d'horloge, une pluralité d'étages de registre et au moins une sortie de données, dans lequel la sortie du convertisseur analogique-numérique (2) est connectée à l'entrée de données du registre à décalage (3) et dans lequel l'entrée du convertisseur analogique-numérique (2) est connectée à la sortie du détecteur (32).

2. Microscope (10) selon la revendication 1, dans lequel la sortie du convertisseur analogique-numérique (2) est également connectée à l'entrée d'horloge du registre à décalage (3).

3. Microscope (10) selon la revendication 1, comprenant un générateur d'horloge (8) ayant une fréquence d'horloge prédéterminée ou pouvant être prédéterminée, qui est connecté à l'entrée d'horloge du registre à décalage (3).

4. Microscope (10) selon l'une quelconque des revendications précédentes, comprenant au moins un registre à décalage supplémentaire (3) et un circuit de basculement (9) qui (pour une pluralité d'impulsions lumineuses consécutives), connecte de manière alternative le registre à décalage (3) au convertisseur A/N (2), ainsi que, plus particulièrement, au circuit à retard (5).

5. Microscope (10) selon l'une quelconque des revendications précédentes, dans lequel le circuit d'évaluation (1) comprend un circuit à retard (5) présentant un retard temporel réglable de manière variable (Δt1) comprenant une entrée destinée à un signal (P), qui est connectée au générateur d'impulsion ou au dispositif de surveillance d'impulsions, et une sortie destinée à délivrer le signal après le temps de retard réglé (Δt1), dans lequel la sortie du circuit à retard (5) est connectée à l'entrée de données du registre à décalage (3) de manière à ce que, du fait de la fourniture du signal retardé (P'), une valeur de marquage, notamment une valeur nulle, soit présente à l'entrée de données en association avec la valeur numérique (a) ou au lieu de celle-ci.

6. Microscope (10) selon la revendication précédente, dans lequel le circuit à retard (5) présente une durée de retard qui correspond à la durée d'une impulsion lumineuse.

7. Microscope (10) selon la revendication 5 ou 6, comprenant un dispositif de commande destiné à régler le retard du circuit à retard, notamment un registre à décalage, notamment sur une surface d'utilisation graphique d'une unité de commande (34) en tant que dispositif de commande.

8. Microscope (10) selon l'une quelconque des revendications précédentes, dans lequel le circuit d'évaluation (1) comprend un circuit de lecture (7) comportant une entrée destinée à un signal de déclenchement, au moins une entrée de données qui est connectée à la sortie de données du registre à décalage (3) et au moins une sortie de somme, dans lequel le circuit de lecture (7), lors de l'application du signal de déclenchement, lit les étages de registre et calcule la somme de valeurs numériques (a) stockées avant la valeur de marquage et/ou calcule la somme de valeurs numériques (a) stockées après la valeur de marquage et la délivre sur la sortie de somme, et est connecté à une unité de commande (34) par l'intermédiaire d'un bus de données pour transmettre les événements de fluorescence détectés, dans lequel le circuit de lecture (7) est disposé en amont du bus de données.

9. Procédé destiné à enregistrer des résultats de fluorescence, dans lequel des impulsions lumineuses sont émises au moyen d'une source lumineuse (23) vers un échantillon (22) et la lumière provenant de l'échantillon (22) est acquise au moyen d'un détecteur optoélectronique (32) dans un microscope (10) selon la revendication 1, et est convertie en un signal électrique puis est délivrée à un convertisseur analogique-numérique (2) et la valeur numérique (a) délivrée par le convertisseur analogique-numérique (2) est stockée dans un étage d'entrée d'un registre à décalage (3).

10. Procédé selon la revendication 9, dans lequel le contenu du registre à décalage (3) est décalé d'un étage lors de l'apparition d'une valeur numérique (a) différente de zéro.

11. Procédé selon la revendication 9, dans lequel le contenu du registre à décalage (3) est décalé d'un étage de manière répétée au bout d'un temps prédéterminé, notamment au moyen d'un générateur d'horloge (3).

12. Procédé selon l'une quelconque des revendications de procédé précédentes, dans lequel un signal (P) synchronisé avec les impulsions lumineuses est identifié et, après cela, une valeur de marquage est stockée dans l'étage d'entrée au bout d'un temps prédéterminé ou pouvant être prédéterminé en association avec la valeur numérique (a) ou au lieu de celle-ci.

13. Procédé selon la revendication précédente, dans lequel les valeurs numériques (a) qui sont stockées avant la valeur de marquage dans le registre à décalage (3) et/ou les valeurs numériques (a) qui sont stockées dans le registre à décalage (3) après la valeur de marquage, sont sommées, notamment avant la transmission de la somme par l'intermédiaire d'un bus de données à un calculateur de commande (34).
